(19) Europäisches Patentamt

European Patent Office

Office européen des brevets

(11) **EP 1 126 431 B1**

(12) **EUROPÄISCHE PATENTSCHRIFT**

(45) Veröffentlichungstag und Bekanntmachung des Hinweises auf die Patenterteilung:
**20.04.2005 Patentblatt 2005/16**

(51) Int Cl.⁷: **G09B 19/16**, G09B 9/042

(21) Anmeldenummer: **01890031.6**

(22) Anmeldetag: **08.02.2001**

(54) **Vorrichtung zur Beeinflussung von Kraftfahrzeugen**

Device for influencing vehicles

Dispositif pour influencer le comportement de conduite de véhicules

(84) Benannte Vertragsstaaten:
**AT BE CH CY DE DK ES FI FR GB GR IE IT LI LU MC NL PT SE TR**

(30) Priorität: **17.02.2000 AT 2402000**

(43) Veröffentlichungstag der Anmeldung:
**22.08.2001 Patentblatt 2001/34**

(73) Patentinhaber: **Thurner, Jörg, Ing.**
**1180 Wien (AT)**

(72) Erfinder: **Thurner, Jörg, Ing.**
**1180 Wien (AT)**

(74) Vertreter: **Babeluk, Michael, Dipl.-Ing.**
**Patentanwalt,**
**Mariahilfer Gürtel 39/17**
**1150 Wien (AT)**

(56) Entgegenhaltungen:
**AU-B- 687 338         FR-A- 2 567 667**

• **DATABASE WPI Section PQ, Week 199033 Derwent Publications Ltd., London, GB; Class P85, AN 1990-252945 XP002201554 & SU 1 524 085 A (BELORUSSIAN POLY), 23. November 1989 (1989-11-23)**

**Beschreibung**

Die vorliegende Erfindung betrifft eine Vorrichtung zur Beeinflussung von Kraftfahrzeugen mit einer im wesentlichen horizontalen, kreisrunden Platte, die um eine vertikale Achse drehbar angeordnet ist.

Der Anmelder der vorliegenden Anmeldung hat sogenannte Schleuderplatten entwickelt, gebaut und in Verkehr gebracht, die zur Ausbildung von Fahrern von Kraftfahrzeugen eingesetzt werden. Mit solchen bekannten Schleuderplatten kann insbesondere das Verhalten beim sogenannten Übersteuern eines Fahrzeuges trainiert werden. Wenn beispielsweise auf glatter Fahrbahn die Hinterräder eines Fahrzeugs in der Kurve nach außen wegrutschen, d. h., wenn das Übersteuern auftritt, kann ein Fahrzeug nur durch schnelles und richtiges Verhalten des Lenkers abgefangen werden. Da solche Situationen jedoch bei vernünftigem Fahrverhalten in der Praxis äußerst selten auftreten, muss die richtige Reaktion für den Ernstfall gezielt geübt werden. Bei herkömmlichen Schleuderplatten lässt man das Fahrzeug mit einer mittleren Geschwindigkeit von beispielsweise 50 km/h über die Platte fahren. Nach dem Auffahren der Hinterräder wird die Platte seitlich ausgelenkt, um dem Kraftfahrzeug im Bereich der Hinterachse einen seitlichen Impuls zu verleihen. Die Bewegung dauert an, bis die Hinterräder die Platte verlassen haben, die danach gebremst und in die Mittelstellung zurückbewegt wird. Im Anschluss an die Schleuderplatte ist zumeist ein Gleitbelag mit verringertem Reibwert vorgesehen. Auf diese Weise kann gezielt das Übersteuern simuliert werden. Durch eine geeignete Einstellung der Auslenkgeschwindigkeit im Zusammenhang mit der Fahrgeschwindigkeit des Fahrzeugs, wodurch sich auch der Weg ergibt, um den die Hinterachse ausgelenkt wird, kann der Schwierigkeitsgrad der Übung reproduzierbar eingestellt werden.

Die bekannten Schleuderplatten sind sehr gut dazu geeignet, bestimmte kritische Fahrsituationen zu simulieren. Sie besitzen jedoch einige Nachteile. So müssen seitlich neben der Schleuderplatte naturgemäß entsprechende Öffnungen vorgesehen sein, um den Bewegungsbereich der Platte zu ermöglichen. Diese Öffnungen sind aus Sicherheitsgründen durch Deckel verschlossen, so dass der nutzbare Bereich quer zur Fahrtrichtung durch die beiden Deckel beschränkt wird. Da die Schleuderplatte relativ große Querbeschleunigungen aufbauen muss, ist es erforderlich, die Platte relativ leicht auszubilden, um die Massenkräfte zu begrenzen. Daher sind auch der Breite einer Schleuderplatte gewisse Grenzen gesetzt.

Es ist daher bei bestehenden Schleuderplatten stets nur möglich, das Übersteuern zu simulieren, das heißt eine Fahrsituation, bei der die Hinterräder des Kraftfahrzeuges die Bodenhaftung verlieren. Das Untersteuern kann aufgrund der beschränkten Breite der Schleuderplatte im Allgemeinen nicht wirklichkeitsgetreu simuliert werden. Ein weiterer Nachteil bekannter Schleuderplatten besteht darin, dass eine relativ aufwendige Steuerung des zumeist hydraulisch ausgeführten Antriebs erforderlich ist, um eine optimale Beschleunigung der Platte zu erreichen. Einerseits soll nämlich die Platte möglichst schnell auf eine maximale Geschwindigkeit beschleunigt werden, wobei jedoch andererseits die Haftreibungsgrenze der Reifen nie überschritten werden darf, da ansonsten die Platte unter den Rädern des Kraftfahrzeuges wegrutscht und dadurch keine wirksame Querbeschleunigung aufgebaut werden kann. Weiters hat sich herausgestellt, dass aufgrund der Knickbeanspruchung der Hydraulikzylinder bei bekannten Schleuderplatten relativ große Durchmesser verwendet werden müssen. Dies führt dazu, dass bei den aufzubringenden Kräften nur mit relativ geringen Hydraulikdrücken gearbeitet werden kann, so dass das Hydrauliksystem einer solchen Schleuderplatte in einem wenig wirtschaftlichen Teillastbereich arbeitet.

Weiters sind kreisrunde Platten bekannt, die sich mit im wesentlichen konstanter Winkelgeschwindigkeit drehen. Bei der Überfahrt eines Kraftfahrzeuges werden zuerst die Vorderräder und danach die Hinterräder zunächst in eine Richtung und im Anschluss daran in die Gegenrichtung versetzt. Solche Platten eignen sich dazu, den nachteiligen Einfluss fehlerhafter Lenkbewegungen eines ungeschulten Fahrers aufzuzeigen. Es ist jedoch bei solchen Vorrichtungen nicht möglich, realitätsnahe Fahrzustände zu simulieren. Insbesondere ist es bei solchen Platten in sehr einfacher Weise möglich, die Fahrsituation zu bewältigen, indem überhaupt keine Reaktion ausgeführt wird. In diesem Fall bewegt sich das Fahrzeug nach dem Verlassen der Platte stabil in der ursprünglichen Richtung. Daher besteht bei solchen Platten die große Gefahr, dass dem Fahrer die falsche Reaktion antrainiert wird, in kritischen Fahrsituationen überhaupt nichts zu tun.

AU-B-687338 offenbart eine horizontale rechteckige Schleuderplatte zur Beeinflussung von Kraftfahrzeugen, wobei die Platte zwischen zwei Endstellungen verschwenkbar ist und ein hydraulisch ausgebildeter Schwenkantrieb zum Verschwenken der Platte vorgesehen ist.

FR-A-2567667 offenbart eine kreisrunde Schleuderplatte zur Beeinflussung von Kraftfahrzeugen.

Aufgabe der vorliegenden Erfindung ist es, diese Nachteile zu vermeiden und eine verbesserte Schleuderplatte zu schaffen, die verschiedene kritische Fahrsituationen realitätsnahe simulieren kann. Dabei soll die Vorrichtung einen möglichst einfachen Aufbau aufweisen und kostengünstig herstellbar sein. Insbesondere soll es möglich sein, sowohl das Übersteuern, als auch das Untersteuern eines Fahrzeuges zu simulieren.

Erfindungsgemäß wird diese Aufgabe dadurch gelöst, dass die Platte zwischen zwei Endstellungen verschwenkbar ist und dass ein hydraulisch ausgebildeter Schwenkantrieb zum Verschwenken der Platte vorgesehen ist, der von einer Steuerungseinrichtung angesteuert ist. Der besondere Vorteil der erfindungsgemäßen Vorrichtung besteht darin, dass aufgrund der kreisrunden Form keine Öffnungen neben der Platte erforderlich sind, die mit Deckel abge-deckt werden müssen. Es sind daher keine Sicherheitsabstände oder besondere Steuerungsmaßnahmen erforderlich, um ein Überfahren dieser Deckeln zu verhindern. Die kreisrunde Form erweist sich jedoch auch bei der Auslegung des Antriebssystems als besonders vorteilhaft. Einerseits ist es möglich, Hydraulikzylinder zum Antrieb der Platte an einer beliebigen Stelle des Durchmessers der Platte anzulenken, so dass der Durchmesser des Zylinders, die Länge des Zylinders und der erforderliche Hydraulikdruck optimiert werden können. Da sich weiters die Querbeschleunigung des Kraftfahrzeuges multiplikativ aus der Drehbeschleunigung der Platte und dem jeweiligen wirksamen Radius zusammensetzt, der von der Stellung des Kraftfahrzeuges auf der Platte abhängig ist, ist es in einfacher Weise möglich, durch entsprechende Auswahl des Startpunkts der Drehbewegung einen entsprechenden Beschleunigungsverlauf zu erzielen, ohne aufwendige hydraulische Steuerungsmaßnahmen vorsehen zu müssen.

Wesentlich an der vorliegenden Erfindung ist, dass die Platte nicht kontinuierlich drehbar ausgeführt ist, sondern stets nur einer begrenzten Schwenkbewegung zwischen vorbestimmten Endstellungen unterworfen wird.

Als besonders günstig hat es sich herausgestellt, wenn die Steuerungseinrichtung so ausgebildet ist, dass die Platte während der Überfahrt des Kraftfahrzeuges aus dem Stillstand beschleunigt wird. Dabei wird während der Überfahrt der Platte eine entsprechende Querbeschleunigung aufgebaut und das Fahrzeug mit einer entsprechenden Gleitgeschwindigkeit quer zur Fahrtrichtung auf den an die Schleuderplatte anschließenden Gleitbelag übergeben. Auf diese Weise kann das Ausbrechen eines Fahrzeuges auf einer rutschigen Straßenoberfläche wirklichkeitsgetreu simuliert werden.

Das Untersteuern kann in besonders wirksamer Weise dadurch simuliert werden, dass die Platte nach der Beschleunigung verzögert wird.

In einer besonders bevorzugten Ausführungsvariante der vorliegenden Erfindung ist vorgesehen, dass der Schwenkantrieb mindestens einen Hydraulikzylinder aufweist, der einerseits an einem Maschinenrahmen und andererseits an der Platte angelenkt ist und dass die Achse des Hydraulikzylinders in der Mittellage der Platte im wesentlichen normal auf eine Verbindungslinie zwischen dem Mittelpunkt der Platte und dem Anlenkpunkt des Hydraulikzylinders an der Platte ist. Im Bereich der Mittellage der Platte ist dabei die Änderung des Drehwinkels der Platte im wesentlichen proportional zur Änderung der Auslenkung des Hydraulikzylinders. Im Bereich einer größeren Auslenkung der Platte aus der Mittellage vergrößert sich jedoch geometrisch bedingt das Übersetzungsverhältnis, so dass bei gleichbleibender Auslenkungsgeschwindigkeit des Hydraulikzylinders die Winkelgeschwindigkeit der Platte zunimmt. Dies stellt einen durchaus erwünschten Effekt dar, da auf diese Weise die Querbeschleunigung gegen Ende der Bewegung noch einmal geringfügig erhöht wird.

Die Lagerbelastung kann dadurch verringert werden, dass der Schwenkantrieb mindestens zwei Hydraulikzylinder aufweist, die punktsymmetrisch zum Mittelpunkt der Platte angeordnet sind. In diesem Fall gleichen sich die Querkräfte auf die Platte aus und es wird nur ein Drehmoment ausgeübt, das die Lager nicht belastet.

Eine völlige Symmetrie der Bewegung in beide Richtungen kann insbesondere dadurch erreicht werden, dass der Schwenkantrieb vier Hydraulikzylinder aufweist, die symmetrisch zum Mittelpunkt der Platte angeordnet sind.

Als besonders günstig hat es sich herausgestellt, wenn der Durchmesser der Platte etwa doppelt so groß ist, wie der durchschnittliche Radstand eines zu beeinflussenden Kraftfahrzeuges. Auf diese Weise wird erreicht, dass sowohl auf die Vorderräder als auch auf die Hinterräder eines Kraftfahrzeuges eine Seitenkraft ausgeübt werden kann, ohne die übrigen Räder übermäßig zu beeinflussen.

Eine einfache Montage und eine günstige Kraftableitung kann erreicht werden, wenn die Platte auf einer Führungsschiene gelagert ist, die fest mit einer zentral verankerten Mittelsäule verbunden ist. Dabei kann die Führungsschiene aus mehreren Segmenten zusammengesetzt sein, um die Handhabung zu erleichtern.

Weiters betrifft die Erfindung ein Verfahren zur Beeinflussung von Kraftfahrzeugen. Erfindungsgemäß ist dieses Verfahren durch folgende Schritte gekennzeichnet:

 a) ein Kraftfahrzeug wird auf eine stillstehende, kreisrunde Platte auffahren gelassen, wobei die Bewegungsrichtung des Kraftfahrzeuges im wesentlichen entlang eines Durchmessers der Platte erfolgt;

 b) die Platte wird durch einen Schwenkantrieb in Drehung versetzt, während sich das Kraftfahrzeug mit den Rädern mindestens einer Achse auf der Platte befindet;

 c) die Drehbewegung der Platte wird fortgesetzt, bis die Räder mindestens einer Achse des Kraftfahrzeuges die Platte verlassen haben.

Das Übersteuern kann wirklichkeitsgetreu dadurch simuliert werden, dass die Drehbewegung der Platte begonnen wird, wenn sich die Hinterräder des Kraftfahrzeuges im mittleren Bereich der Platte befinden und dass die Drehbewegung der Platte fortgesetzt wird, bis die Hinterräder des Kraftfahrzeuges die Platte verlassen haben.

Um das Untersteuern optimal zu simulieren, wird so vorgegangen, dass die Drehbewegung der Platte begonnen wird, nachdem die Vorderräder des Kraftfahrzeuges mindestens 50% und höchstens 80% des zur Fahrtrichtung parallelen Durchmessers zurückgelegt haben und dass die Drehbewegung gestoppt wird, nachdem die Vorderräder die Platte verlassen haben, während sich die Hinterräder noch auf der Platte befinden. Durch diese Steuerung der Drehbewegung der Platte wird erreicht, dass dann, wenn die Vorderräder nahezu die gesamte Platte passiert haben und sich im Bereich des hinteren Plattenrandes befinden und somit der stärksten Querbewegung ausgesetzt sind, die Hinterräder des Kraftfahrzeuges im Bereich der Plattenmitte befinden. Dadurch werden die Hinterräder nur minimal beeinflusst und es kann nahezu ausschließlich das Wegrutschen der Vorderräder simuliert werden. Dies wird insbesondere dadurch sichergestellt, dass unmittelbar nachdem die Vorderräder die Platte verlassen haben, diese gestoppt wird.

Eine besonders schwierige Fahrsituation kann dadurch hervorgerufen werden, dass die Drehbewegung der Platte begonnen wird, nachdem die Vorderräder des Kraftfahrzeuges mindestens 50% und höchstens 80% des zur Fahrtrichtung parallelen Durchmessers zurückgelegt haben und dass die Platte nach dem Verlassen der Vorderräder des Kraftfahrzeuges gestoppt und in die entgegengesetzte Richtung gedreht wird, solange sich die Hinterräder des Kraftfahrzeuges auf der Platte befinden. Auf diese Weise kann ein völlig instabiles Fahrzeug simuliert werden.

Als besonders günstig im Sinne der Erfindung hat es sich herausgestellt, wenn der Winkel der Schwenkbewegung maximal 90°, vorzugsweise maximal 60° beträgt. Der beidseitige Schwenkwinkel aus der Mittelstellung beträgt somit höchstens 45° bzw. 30°. Auf diese Weise wird insbesondere sichergestellt, dass die durch die Querbeschleunigung und die Quergeschwindigkeit hervorgerufenen Effekte über rein geometrisch bedingten Effekten, wie die Querstellung des Fahrzeuges, dominieren.

In der Folge wird die vorliegende Erfindung anhand der in den Figuren dargestellten Ausführungsbeispiele näher erläutert. Es zeigen

Fig. 1 schematisch die Anordnung einer erfindungsgemäßen Vorrichtung auf einem Übungsplatz,

Fig. 2 einen vertikalen Schnitt durch eine erfindungsgemäße Vorrichtung,

Fig. 3 und 4 schematisch Ausführungsvarianten der erfindungsgemäßen Vorrichtung in einer Draufsicht und die

Fig. 5, 6 und 7 Diagramme, die den Ablauf des erfindungsgemäßen Verfahrens erläutern.

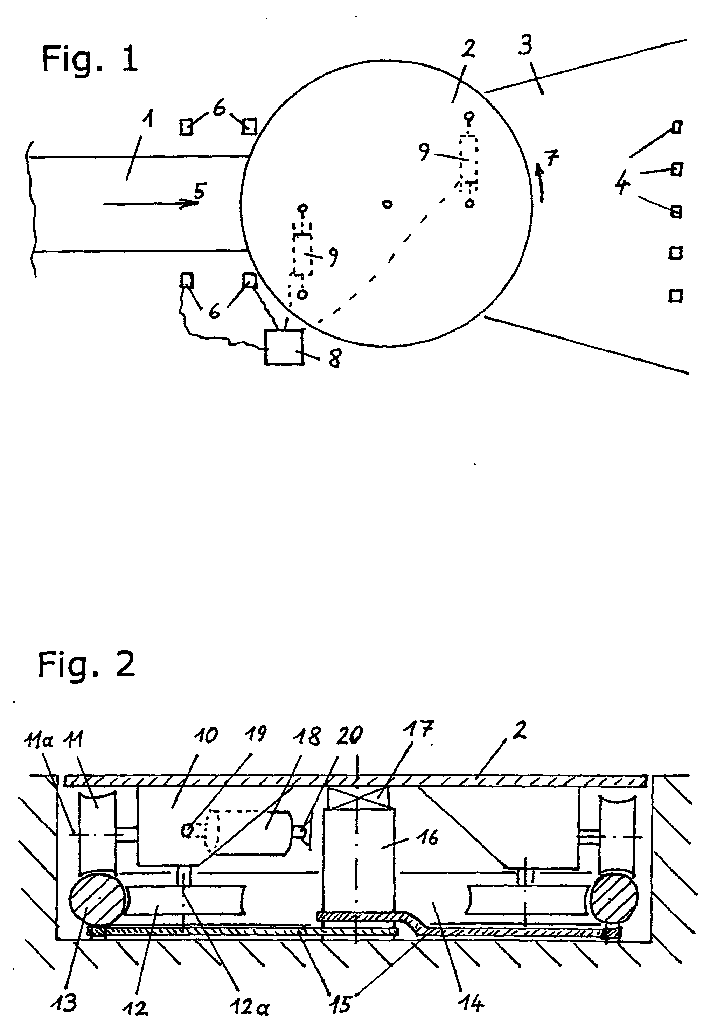

Der Übungsplatz von Fig. 1 besteht aus einer Anlaufstrecke 1, einer Platte 2 und einer Auslauffläche 3 mit Hindernissen 4, die gegebenenfalls beweglich angeordnet sind. Die Auslauffläche 3 besitzt einen verringerten Reibwert, um entsprechende Schleuderbewegungen schon bei möglichst geringen Geschwindigkeiten zuzulassen. Die Hindernisse 4 sind beispielsweise aus Düsen gebildet, die im Boden eingelassen sind und aus denen Wasserstrahlen nach oben ausgestoßen werden können, denen der Fahrer des Kraftfahrzeuges ausweichen muss. Das nicht dargestellte Kraftfahrzeug fährt im Sinne des Pfeils 5 an der Anlaufstrecke 1 an, wobei die Anfahrt durch Lichtschranken 6 überwacht wird. Wenn sich das Kraftfahrzeug auf der Platte 2 befindet, wird diese beispielsweise in Richtung des Pfeils 7 ausgelenkt, um eine Schleuderbewegung zu simulieren. Der Beginn und das Ende der Bewegung der Platte 2 werden je nach Art der Übung unterschiedlich von einer Steuerungseinrichtung 8 festgelegt, die einen schematisch angedeuteten Schwenkantrieb 9 der Platte 2 ansteuert. Der maximale Schwenkwinkel der Platte 2 beträgt jeweils 30° in beide Richtungen aus der Neutralstellung. Die möglichen Steuerungsverfahren werden in der Folge detailliert beschrieben. Nach dem Verlassen der Platte 2 muss der Fahrer das Kraftfahrzeug abfangen und gegebenenfalls den Hindernissen 4 ausweichen. Durchmesser d der Platte 2 beträgt etwa 5 bis 6 Meter, was dem doppelten Wert des Radstandes eines durchschnittlichen Kraftfahrzeuges entspricht.

In der Fig. 2 ist der Aufbau einer erfindungsgemäßen Vorrichtung im Schnitt dargestellt. An der Unterseite der Platte 2 sind Rollenböcke 10 befestigt, die erste Rollen 11 mit horizontaler Achse 11a und zweite Rollen 12 mit vertikaler Achse 12a tragen. Die Rollen 11, 12 laufen auf einer Führungsschiene 13 ab, die einen kreisförmigen Querschnitt aufweist. Die Führungsschiene 13 ist am Boden einer Montagegrube 14 gelagert. Um eine völlig kreisrunde und ebene Ausrichtung der mehrteilig ausgeführten Führungsschiene 13 zu gewährleisten sind die einzelnen Segmente der Führungsschiene 13 über Verbindungsstangen 15 mit einer zentral in der Montagegrube 14 verankerten Mittelsäule 16 verbunden. Dadurch kann auch eine einfache Montage und eine günstige Kraftableitung erreicht werden. Falls erforderlich kann die Platte 2 zusätzlich durch ein Axiallager 17 an der Mittelsäule 16 abgestützt sein. Die Hydraulikzylinder 18 sind über Halterungen 19 an der Platte 2 angelenkt. Verankerungen 20 stützen die gegenüberliegenden Enden der Hydraulikzylinder 18 am Fundament ab.

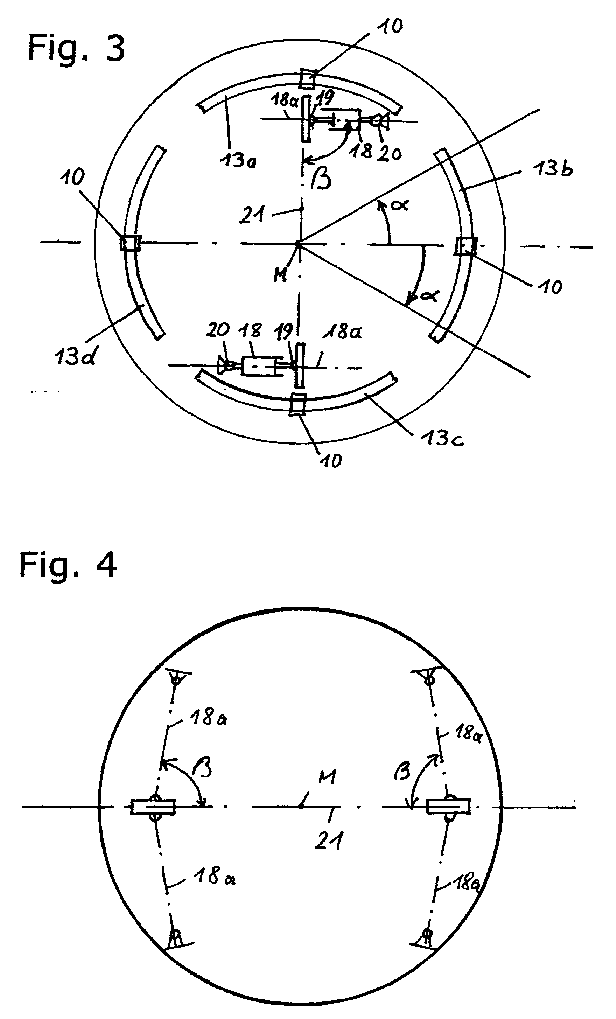

Die Fig. 3 zeigt eine Draufsicht auf eine erfindungsgemäße Ausführungsvariante, wobei die Platte 2 zur Vereinfachung der Darstellung weggelassen ist. Die Platte besitzt einen Schwenkwinkel $\alpha$ von jeweils 30° in beide Richtungen aus der neutralen Lage, wie sie in der Fig. 3 dargestellt ist, somit beträgt der Gesamtschwenkwinkel 60°. Die Führungsschiene 13 ist bei der Ausführungsvariante von Fig. 3 in Segmente 13a, 13b, 13c und 13d aufgeteilt, die jeweils etwas mehr als den doppelten Schwenkwinkel $\alpha$ abdecken. Die Rollenböcke sind mit 10 angedeutet. Bei der Ausführungsvariante von Fig. 3 sind zwei Hydraulikzylinder 18 punktsymmetrisch zum Mittelpunkt M der Platte 2 angeordnet. Die Achsen 18a der Hydraulikzylinder 18 sind in der Mittellage, das heißt der Neutralstellung der Platte 2, in einem Winkel $\beta$ in Bezug auf die Verbindungslinie 21 des Mittelpunkts M der Platte 2 mit den Anlenkpunkten 19 der Hydraulikzylinder 18 an der Platte 2 geneigt, wobei der Winkel $\beta$ ein rechter Winkel ist. Es ist dabei offensichtlich, dass der Winkel $\beta$ bei Auslenkung der Platte 2 in einer Richtung entgegen dem Uhrzeigersinn kleiner wird, so dass die Winkeländerung der Platte pro Einheit der Längenänderung der Hydraulikzylinder 18 zunimmt. Dies bedeutet, dass bei gleichmäßiger Verlängerung der Hydraulikzylinder 18 die Winkelgeschwindigkeit der Platte 2 ausgehend von der Mittellage in Richtung der Endlagen leicht zunimmt.

In der Fig. 4 ist eine Ausführungsvariante ähnlich der Fig. 3 dargestellt. Zur Vereinfachung der Darstellung sind dabei nur die Achsen 18a von vier nicht näher dargestellten Hydraulikzylindern eingezeichnet. Die Hydraulikzylinder sind dabei symmetrisch zum Mittelpunkt M der Platte 2 angeordnet und können einfach wirwirkend ausgebildet sein. Der Winkel $\beta$ zwischen der Linie 21 und den Achsen 18a beträgt etwa 80°. Auf diese Weise wird der oben beschriebene Effekt des unterschiedlichen Übersetzungsverhältnisses wesentlich verringert und es kann eine annähernd gleichmäßige Winkelgeschwindigkeit der Platte 2 realisiert werden.

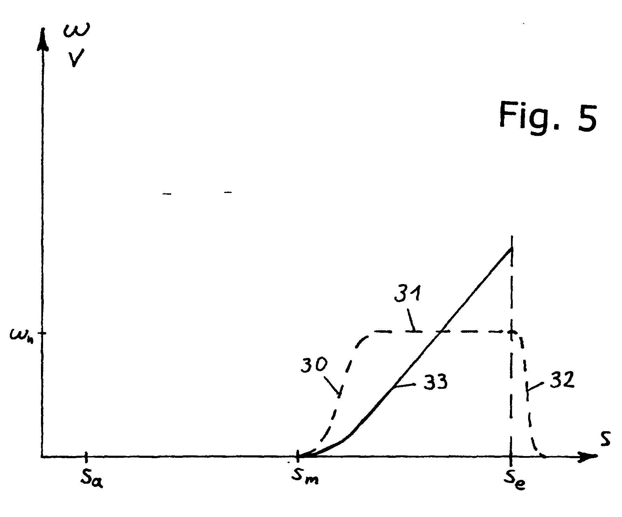

In der Fig. 5 ist anhand eines Diagramms schematisch der Bewegungsablauf dargestellt, wenn das Untersteuern simuliert werden soll. In dem Diagramm ist auf der waagrechten Achse der Weg s aufgetragen, wobei der Punkt $s_a$ dem Anfang der Platte 2 $s_m$ dem Mittelpunkt der Platte 2 und $s_e$ dem Endpunkt der Platte 2 entspricht. Auf der senkrechten Achse sind die Winkelgeschwindigkeit $\omega$ und die Quergeschwindigkeit v der betreffenden Achse des Kraftfahrzeuges dargestellt. Bei der Ausführungsvariante von Fig. 5 wird davon ausgegangen, dass die Drehung der Platte dann begonnen wird, wenn die Hinterräder des Kraftfahrzeuges in der Mitte der Platte 2 am Punkt $s_m$ angelangt sind. Mit der unterbrochenen Linie ist der Verlauf der Winkelgeschwindigkeit dargestellt. Daraus ist ersichtlich, dass nach einer kurzen Phase schneller Beschleunigung im Abschnitt 30 eine längere Phase 31 folgt, in der die Platte 2 mit einer konstanten Winkelgeschwindigkeit $\omega_n$ bewegt wird. Die Drehung der Platte mit der Winkelgeschwindigkeit $\omega_n$ wird beibehalten, solange sich die Hinterräder des Kraftfahrzeuges auf der Platte 2 befinden, danach wird in einem Abschnitt 32 die Drehung der Platte 2 gestoppt. Mit der durchgezogenen Linie 33 ist die seitliche Auslenkungsgeschwindigkeit oder Quergeschwindigkeit v der Hinterräder des Kraftfahrzeuges aufgetragen.

Aus der Beziehung

$$v = r * \omega \qquad (1)$$

folgt, dass die Geschwindigkeit v mit zunehmenden Abstand vom Mittelpunkt der Platte zunimmt. Die Querbeschleunigung des Kraftfahrzeuges ist daher im Hauptteil der Bewegung im wesentlichen konstant, so dass bei vorgegebener Haftreibungsgrenze eine optimale Ausnützung der physikalisch möglichen Beschleunigung erfolgt.

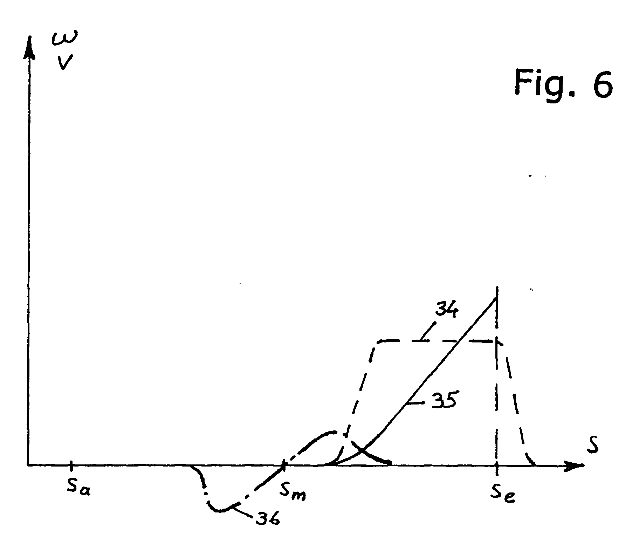

Die Fig. 6 zeigt ein Diagramm ähnlich der Fig. 5 mit dem Unterschied, dass die unterbrochene Linie 34 die Winkelgeschwindigkeit der Platte 2 in Abhängigkeit von der Stellung der Vorderachse des Kraftfahrzeuges angibt und dass die durchgezogene Linie 35 die entsprechende Quergeschwindigkeit v der Vorderachse angibt. Auf diese Weise kann das Übersteuern simuliert werden. Wenn sich die Vorderachse im hinteren Bereich der Platte 2 befindet und die Platte 2 von einer geeigneten Abmessung ist, dann befindet sich die Hinterachse des Kraftfahrzeuges im mittleren Bereich der Platte 2 und wird dementsprechend von der Drehung der Platte 2 ebenfalls beeinflusst. Mit der strichpunktierten Linie 36 ist dabei die Quergeschwindigkeit v der Hinterachse eingezeichnet. Solange sich die Hinterachse vor dem Mittelpunkt $s_m$ der Platte 2 befindet, erfolgt die Auslenkung naturgemäß in die entgegengesetzte Richtung zur Vorderachse. Die Auslenkungsgeschwindigkeit nimmt jedoch mit der Annäherung an den Mittelpunkt M ab, um danach wieder anzusteigen. Insgesamt sind jedoch die Geschwindigkeiten, die an der Hinterachse auftreten wesentlich geringer als die an der Vorderachse auftretenden Werte, so dass die Beeinflussung der Hinterachse relativ gering ist.

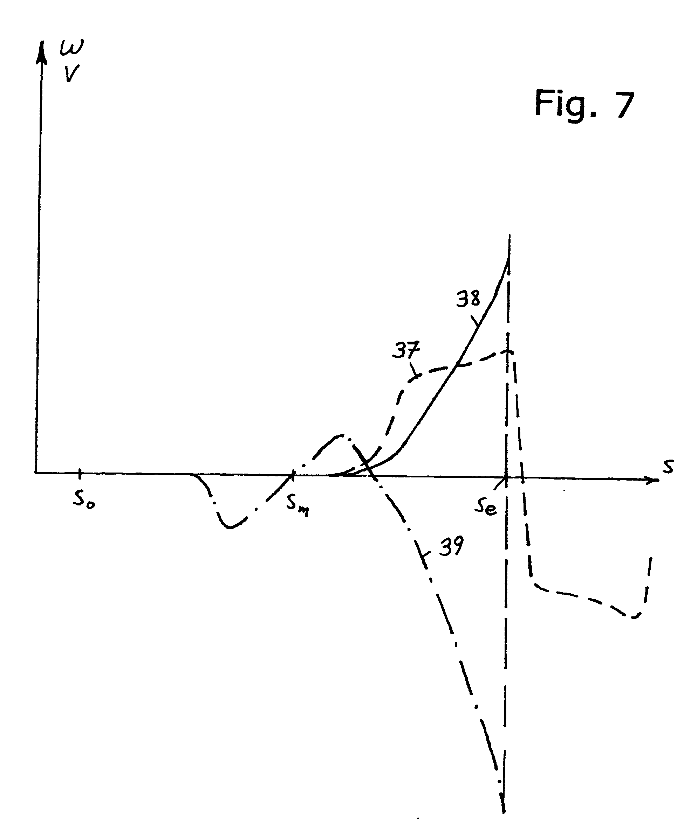

In der Fig. 7 ist eine Situation ähnlich der von Fig. 6 dargestellt. Die unterbrochene Linie 37 zeigt die Winkelgeschwindigkeit $\omega$ der Platte 2 in Abhängigkeit von der Stellung der Vorderachse des Kraftfahrzeuges. Auch hier wird die Bewegung der Platte 2 begonnen, nachdem die Vorderräder etwa 60 bis 70% des Plattendurchmessers zurückgelegt haben. Unterschiedlich zu der Ausführung von Fig. 6 ist, dass die Winkelgeschwindigkeit $\omega$ während des Hauptteils der Bewegung nicht konstant ist, sondern infolge der Geometrie der Hydraulikzylinder leicht ansteigt. Weiters wird die Platte 2 nach dem Verlassen der Vorderräder nicht nur abgebremst, sondern in die entgegengesetzte Richtung beschleunigt. Die durchgezogene Linie 38 zeigt den leicht überproportionalen Anstieg der Quergeschwindigkeit v der Vorderräder.

Mit der strichpunktierten Linie 39 ist die Quergeschwindigkeit v der Hinterräder des Kraftfahrzeuges dargestellt. Wie schon bei Fig. 6 erläutert, erfolgt zunächst eine Beschleunigung der Hinterräder in die entgegengesetzte Richtung, welche Bewegung sich nach dem Passieren des Mittelpunktes M umkehrt. Insgesamt sind die dabei auftretenden Geschwindigkeiten jedoch relativ gering. Nach dem Wechsel der Drehrichtung der Platte erfolgt eine relativ starke Beschleunigung der Hinterachse, in die im Vergleich zur Vorderachse entgegengesetzte Richtung. Auf diese Weise kann ein hochgradig instabiles Fahrzeug in wirklichkeitsgetreuer Weise simuliert werden.

Der besondere Vorteil der Erfindung liegt darin, dass die in den Fig. 5 bis 7 dargestellten Geschwindigkeitsverläufe ohne aufwendige elektronische oder hydraulische Regelungsmaßnahmen erzielbar sind. Die konstante oder leicht ansteigende Winkelgeschwindigkeit ω der Platte 2 ergibt sich aus der jeweiligen Fördermenge der Hydraulikpumpe und der Geometrie der Anlenkung der Hydraulikzylinder 18, wie dies oben unter Bezugnahme auf die Fig. 3 und 4 beschrieben worden ist.

Die vorliegende Erfindung ermöglicht es mit einfachen Mitteln, eine Vielzahl von Fahrzuständen zu simulieren.

**Patentansprüche**

1. Vorrichtung zur Beeinflussung von Kraftfahrzeugen mit einer im wesentlichen horizontalen, kreisrunden Platte (2), die um eine vertikale Achse drehbar angeordnet ist, wobei die Platte (2) zwischen zwei Endstellungen verschwenkbar ist und ein hydraulisch ausgebildeter Schwenkantrieb (9) zum Verschwenken der Platte (2) vorgesehen ist, der von einer Steuerungseinrichtung (8) angesteuert ist.

2. Vorrichtung nach Anspruch 1, **dadurch gekennzeichnet, dass** der Schwenkantrieb (9) mindestens einen Hydraulikzylinder (18) aufweist, der einerseits an einem Maschinenrahmen und andererseits an der Platte (2) angelenkt ist und dass die Achse des Hydraulikzylinders (18) in der Mittellage der Platte (2) im wesentlichen normal auf eine Verbindungslinie zwischen dem Mittelpunkt M der Platte (2) und dem Anlenkpunkt (19) des Hydraulikzylinders (18) an der Platte (2) ist.

3. Vorrichtung nach einem der Ansprüche 1 oder 2, **dadurch gekennzeichnet, dass** der Schwenkantrieb (9) mindestens zwei Hydraulikzylinder (18) aufweist, die punktsymmetrisch zum Mittelpunkt der Platte (2) angeordnet sind.

4. Vorrichtung nach Anspruch 3, **dadurch gekennzeichnet, dass** der Schwenkantrieb (9) vier Hydraulikzylinder (18) aufweist, die symmetrisch zum Mittelpunkt der Platte (2) angeordnet sind.

5. Vorrichtung nach einem der Ansprüche 1 bis 4, **dadurch gekennzeichnet, dass** der Durchmesser d der Platte (2) etwa doppelt so groß ist, wie der durchschnittliche Radstand eines zu beeinflussenden Kraftfahrzeuges.

6. Vorrichtung nach einem der Ansprüche 1 bis 5, **dadurch gekennzeichnet, dass** die Platte (2) auf einer Führungsschiene (13) gelagert ist, die fest mit einer zentral verankerten Mittelsäule verbunden ist.

7. Vorrichtung nach einem der Ansprüche 1 bis 6, **dadurch gekennzeichnet, dass** die Platte (2) auf einer Führungsschiene (13) gelagert ist, die aus mehreren Segmenten zusammengesetzt ist.

8. Verfahren zum Beeinflussen von Kraftfahrzeugen mit folgenden Schritten:

   a) ein Kraftfahrzeug wird auf eine stillstehende, kreisrunde Platte (2) auffahren gelassen, wobei die Bewegungsrichtung des Kraftfahrzeuges im wesentlichen entlang eines Durchmessers der Platte (2) erfolgt;

   b) die Platte (2) wird durch einen hydraulisch ausgebildeten Schwenkantrieb (9) in Drehung versetzt, während sich das Kraftfahrzeug mit den Rädern mindestens einer Achse auf der Platte (2) befindet;

   c) die Drehbewegung der Platte (2) wird fortgesetzt, bis die Räder mindestens einer Achse des Kraftfahrzeuges die Platte (2) verlassen haben.

9. Verfahren nach Anspruch 8, **dadurch gekennzeichnet, dass** die Drehbewegung der Platte (2) begonnen wird, wenn sich die Hinterräder des Kraftfahrzeuges im mittleren Bereich der Platte (2) befinden und dass die Drehbewegung der Platte (2) fortgesetzt wird, bis die Hinterräder des Kraftfahrzeuges die Platte (2) verlassen haben.

10. Verfahren nach Anspruch 8, **dadurch gekennzeichnet, dass** die Drehbewegung der Platte (2) begonnen wird, nachdem die Vorderräder des Kraftfahrzeuges mindestens 50% und höchstens 80% des zur Fahrtrichtung parallelen Durchmessers zurückgelegt haben und dass die Drehbewegung gestoppt wird, nachdem die Vorderräder die Platte (2) verlassen haben, während sich die Hinterräder noch auf der Platte (2) befinden.

11. Verfahren nach Anspruch 8, **dadurch gekennzeichnet, dass** die Drehbewegung der Platte (2) begonnen wird nachdem die Vorderräder des Kraftfahrzeuges mindestens 50% und höchstens 80% des zur Fahrtrichtung parallelen Durchmessers zurückgelegt haben und dass die Platte (2) nach dem Verlassen der Vorderräder des Kraftfahrzeuges gestoppt und in die entgegengesetzte Richtung gedreht wird, solange sich die Hinterräder des Kraftfahrzeuges auf der Platte (2) befinden.

12. Verfahren nach einem der Ansprüche 8 bis 11, **dadurch gekennzeichnet, dass** der Winkel der Schwenkbewegung maximal 90°, vorzugsweise maximal 60° beträgt.

**Claims**

1. Apparatus for influencing automotive vehicles, comprising an essentially horizontal circular plate (2) which is positioned so as to be rotatable about a vertical axis, wherein the plate (2) can be slewed between two extreme positions, and where a hydraulic slewing mechanism (9) is provided for slewing the plate (2), which mechanism (9) is controlled by a control unit (8).

2. Apparatus according to claim 1, **characterized in that** the slewing mechanism (9) is provided with at least one hydraulic cylinder (18), which is linked to a frame on the one hand and the plate (2) on the other hand, and that in the middle position of the plate (2) the axis of the hydraulic cylinder (18) is essentially normal to a line connecting the centre point M of the plate (2) and the linking point (19) of the hydraulic cylinder (18) on the plate (2).

3. Apparatus according to any of claims 1 or 2, **characterized in that** the slewing mechanism (9) is provided with at least two hydraulic cylinders (18) which are positioned point-symmetrically to the centre point M of the plate (2).

4. Apparatus according to claim 3, **characterized in that** the slewing mechanism (9) is provided with four hydraulic cylinders (18) which are positioned symmetrically to the centre point M of the plate (2).

5. Apparatus according to any of claims 1 to 4, **characterized in that** the diameter d of the plate (2) is approximately twice the average wheelbase of the automotive vehicle to be subjected to forces.

6. Apparatus according to any of claims 1 to 5, **characterized in that** the plate (2) is borne on a guide rail (13) which is firmly connected to a centrally anchored centre column.

7. Apparatus according to any of claims 1 to 6, **characterized in that** the plate (2) is borne on a guide rail (13) which is composed of a plurality of segments.

8. A method for influencing automotive vehicles, including the following steps:

a vehicle is driven onto a circular plate (2) which is at a standstill, the direction of movement of the vehicle being essentially along a diameter of the plate (2);

(a) the plate (2) is set rotating by means of an hydraulic slewing mechanism (9) while the vehicle is in touch with the plate (2) with the wheels of at least one axle;

(b) the rotary motion of the plate (2) is continued until the wheels of at least one axle of the vehicle have left the plate (2).

9. Method according to claim 8, **characterized in that** the rotary motion of the plate (2) starts when the rear wheels of the vehicle have reached the middle part of the plate (2), and that rotation of the plate (2) is continued until the rear wheels of the vehicle have left the plate (2).

10. Method according to claim 8, **characterized in that** the rotary motion of the plate (2) starts after the front wheels of the vehicle have passed at least 50% and at most 80% of the diameter parallel to the direction of movement of the vehicle, and that the rotation is stopped after the front wheels have left the plate (2), the rear wheels still being on the plate (2).

11. Method according to claim 8, **characterized in that** the rotary motion of the plate (2) starts after the front wheels of the vehicle have passed at least 50% and at most 80% of the diameter parallel to the direction of movement of the vehicle, and that the plate (2) is stopped after the front wheels of the vehicle have left it and is slewed in the opposite direction, the rear wheels of the vehicle still being on the plate (2).

12. Method according to any of claims 8 to 11, **characterized in that** the maximum angle of rotation is 90°, and preferably not more than 60°.

**Revendications**

1. Dispositif pour influencer les véhicules comprenant une plaque circulaire (2) essentiellement horizontale, montée à rotation autour d'un axe vertical, la plaque (2) pouvant pivoter entre deux positions de fin de course et un entraînement en pivotement (9), hydraulique, assure le pivotement de la plaque (2), cet entraînement étant commandé par une installation de commande (8).

**2.** Dispositif selon la revendication 1, **caractérisé en ce que** l'entraînement en pivotement (9) comprend au moins un vérin hydraulique (18) articulé d'un côté au châssis de la machine et de l'autre à la plaque (2) et l'axe du vérin hydraulique (18) est pratiquement perpendiculaire à la ligne de jonction du centre M de la plaque (2) et du point d'articulation (19) du vérin hydraulique (18) à la plaque (2) lorsque la plaque (2) occupe sa position intermédiaire.

**3.** Dispositif selon l'une des revendications 1 ou 2, **caractérisé en ce que** l'entraînement en pivotement (9) comprend au moins deux vérins hydrauliques (18) installés en position symétrique par rapport au point constitué par le centre de la plaque (2).

**4.** Dispositif selon la revendication 3, **caractérisé en ce que** l'entraînement en pivotement (9) comprend quatre vérins hydrauliques (18) installés en position symétrique par rapport au centre de la plaque (2).

**5.** Dispositif selon l'une des revendications 1 à 4, **caractérisé en ce que** le diamètre d de la plaque (2) est sensiblement double de l'empattement moyen d'un véhicule à influencer.

**6.** Dispositif selon l'une des revendications 1 à 5, **caractérisé en ce que** la plaque (2) est montée sur un rail de guidage (13) relié solidairement à une colonne centrale ancrée en position centrale.

**7.** Dispositif selon l'une des revendications 1 à 6, **caractérisé en ce que** la plaque (2) est montée sur un rail de guidage (13) composé de plusieurs segments.

**8.** Procédé pour influencer des véhicules automobiles comprenant les étapes suivantes :

a) on laisse circuler un véhicule automobile sur une plaque circulaire (2) à l'arrêt, la direction de mouvement du véhicule étant principalement suivant un diamètre de la plaque (2),
b) on fait tourner la plaque (2) à l'aide d'un entraînement en pivotement (9), hydraulique, pendant que les roues d'au moins un essieu du véhicule se trouvent sur la plaque (2),
c) on poursuit le mouvement de rotation de la plaque (2) jusqu'à ce que les roues d'au moins un essieu du véhicule aient quitté la plaque (2).

**9.** Procédé selon la revendication 8, **caractérisé en ce qu'**

on commence le mouvement de rotation de la plaque (2) lorsque les roues arrière du véhicule se trouvent dans la zone centrale de la plaque (2) et on poursuit le mouvement de rotation de la plaque (2) jusqu'à ce que les roues arrière du véhicule aient quitté la plaque (2).

**10.** Procédé selon la revendication 8, **caractérisé en ce qu'** on commence le mouvement de rotation de la plaque (2) après que les roues avant du véhicule aient parcouru au moins 50 % et au plus 80 % du diamètre parallèle à la direction de déplacement et on arrête le mouvement de rotation après que les roues avant aient quitté la plaque (2) alors que les roues arrière se trouvent encore sur la plaque (2).

**11.** Procédé selon la revendication 8, **caractérisé en ce qu'** on commence le mouvement de rotation de la plaque (2) après que les roues avant du véhicule aient parcouru au moins 50 % et au plus 80 % du diamètre parallèle à la direction de déplacement et on arrête la plaque (2) après que les roues avant du véhicule aient quitté la plaque et on tourne dans le sens opposé aussi longtemps que les roues arrière du véhicule se trouvent sur la plaque (2).

**12.** Procédé selon l'une des revendications 8 à 11, **caractérisé en ce que** l'angle du mouvement de pivotement est au maximum égal à 90°, de préférence au maximum égal à 60°.

## Fig. 1

## Fig. 2

Fig. 3

Fig. 4

Fig. 5

Fig. 6

Fig. 7